(19) Europäisches Patentamt
European Patent Office
Office européen des brevets

(11) **EP 2 962 301 B1**

(12) **FASCICULE DE BREVET EUROPEEN**

(45) Date de publication et mention de la délivrance du brevet:
**25.12.2019 Bulletin 2019/52**

(21) Numéro de dépôt: **14713179.1**

(22) Date de dépôt: **25.02.2014**

(51) Int Cl.:
*G10L 25/54* (2013.01)    *G06F 16/683* (2019.01)
*G10H 1/00* (2006.01)

(86) Numéro de dépôt international:
**PCT/FR2014/050399**

(87) Numéro de publication internationale:
**WO 2014/131984 (04.09.2014 Gazette 2014/36)**

(54) **GENERATION D'UNE SIGNATURE D'UN SIGNAL AUDIO MUSICAL**

ERZEUGUNG EINER SIGNATUR EINES MUSIKALISCHEN TONSIGNALS

GENERATION OF A SIGNATURE OF A MUSICAL AUDIO SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2013 FR 1351752**

(43) Date de publication de la demande:
**06.01.2016 Bulletin 2016/01**

(73) Titulaire: **Institut Mines-Telecom
75634 Paris (FR)**

(72) Inventeurs:
• **FENET, Sébastien
94230 Cachan (FR)**
• **GRENIER, Yves
78114 Magny Les Hameaux (FR)**
• **RICHARD, Gaël
78220 Viroflay (FR)**

(74) Mandataire: **Plasseraud IP
66, rue de la Chaussée d'Antin
75440 Paris Cedex 09 (FR)**

(56) Documents cités:
**EP-A2- 2 106 050        WO-A1-02/065782
WO-A1-03/091990        US-A1- 2006 020 958
US-A1- 2008 263 360        US-A1- 2009 234 649
US-A9- 2009 265 174**

• **WANG A: "An Industrial-Strength Audio Search Algorithm", PROCEEDINGS OF 4TH INTERNATIONAL CONFERENCE ON MUSIC INFORMATION RETRIEVAL, BALTIMORE, MARYLAND, USA, 27 octobre 2003 (2003-10-27), XP002632246,**
• **WANG A: "An Industrial-Strength Audio Search Algorithm", PROCEEDINGS OF 4TH INTERNATIONAL CONFERENCE ON MUSIC INFORMATION RETRIEVAL, BALTIMORE, MARYLAND, USA, 27 October 2003 (2003-10-27), XP002632246,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 962 301 B1**

**Description**

La présente invention concerne la génération de signature pour l'identification de signaux audio.

Elle concerne plus précisément l'identification de signaux audio musicaux par extraction d'empreintes (communément appelée « audio-fingerprinting »).

L'identification de signaux audio a pour but de récupérer des métadonnées afin de les associer à un extrait audio inconnu a priori. Les terminaux mobiles tels que des téléphones mobiles de type Smartphone tendent à intégrer de telles applications d'identification. A cet effet, l'utilisateur capture un extrait audio au moyen du microphone de son Smartphone et l'application renvoie un ensemble de métadonnées telles que le titre d'une chanson, le nom d'un artiste, le nom d'un album, etc.

L'identification de signaux audio possède également des applications dans le contrôle automatique de droit d'auteur, dans la segmentation et l'annotation automatiques de flux multimédia, dans la détection de jingle, etc.

L'extraction d'empreinte est l'outil le plus répandu pour effectuer l'identification de signaux audio de requête lorsqu'aucune métadonnée n'est attachée au signal audio inconnu. Elle consiste à extraire, de signaux audio de référence, une représentation compacte (empreinte ou signature) qui est ensuite stockée dans une base de données. Lors de l'identification d'un signal audio de requête, sa signature est extraite. La meilleure correspondance avec la signature extraite est alors recherchée dans la base de données comprenant les signatures des signaux audio de référence.

On connaît de nombreux exemples de modèles d'empreintes (ou signatures) ainsi que de nombreuses méthodes de recherche de la meilleure correspondance.

En particulier, deux objectifs sont généralement mis en avant dans les méthodes connues :

- le signal audio capturé (de requête) doit être reconnu même s'il a subi une série de distorsions ;
- l'algorithme mis en œuvre doit pouvoir gérer une base de données contenant des quantités très importantes de signaux audio de référence.

Dans l'état de l'art, la robustesse à la distorsion est généralement définie comme étant la robustesse à différents post-traitements du signal audio. En effet, la problématique qui est généralement considérée est l'identification d'un signal qui a été tronqué, ré-égalisé, compressé en amplitude, étiré temporellement, décalé au niveau du pitch, et/ou enregistré dans un environnement avec un mauvais microphone. Autrement dit, il s'agit de distorsions introduites dans le canal de transmission lors de la diffusion du signal audio.

Selon les méthodes, la robustesse couvre plus ou moins ces types de distorsions, mais ces distorsions correspondent toutes à des post-traitements appliqués à un signal de référence. Le signal audio de requête correspond alors à l'un des signaux audio de référence auquel a été appliqué une série de distorsions, et l'identification consiste à retrouver le signal audio de référence. Une telle identification est appelée « identification quasi-exacte ».

En audio on définit deux signaux audio similaires comme étant deux signaux audio qui présentent les mêmes caractéristiques harmoniques, rythmiques et mélodiques. Intuitivement, ce sont deux signaux audio qui seront considérés comme proches par un être humain.

Cependant, les méthodes par extraction d'empreintes traditionnelles ne traitent généralement pas du cas dans lequel deux signaux audio sont similaires. Cela signifie notamment que si le système a appris un titre (alors stocké dans une base de données sous la forme d'un signal audio de référence) et qu'il est requis l'identification d'une reprise de ce titre (signal audio de requête), le système sera incapable d'indiquer la correspondance.

De manière plus gênante, un même titre, avec la même instrumentation, qui est réenregistré par le même artiste, ne sera pas considéré comme correspondant au titre original. En effet, bien que, pour l'oreille humaine, les deux enregistrements semblent être les mêmes, les légères variations qui existent entre les deux versions (légers décalages rythmiques, chant légèrement modifié, exécution instrumentale un peu différente) en font des signaux radicalement différents d'un point de vue informatique.

L'identification de deux signaux audio similaires est appelée « identification approchée ».

De telles limitations sont principalement dues au fait que les méthodes par extraction d'empreintes traditionnelles utilisent des informations de bas niveau pour caractériser le signal. Ces informations, qui intègrent très peu de signification musicale, ne sont pas conservées d'une version à une autre d'un même titre.

Ainsi, les méthodes par extraction d'empreintes sont peu utilisées dans les domaines de la similarité musicale ou de la détection de reprises.

Par ailleurs, des approches permettant de mettre en correspondance deux versions différentes d'une même chanson ont été développées. Cependant, de telles approches sont incapables de traiter des bases de données de signaux de référence de grande taille. En effet, ces méthodes sont consommatrices en ressources et requièrent de comparer un par un les signaux audio de référence au signal audio de requête.

Il existe donc un besoin de définir une signature d'un signal audio qui permette à la fois l'identification quasi-exacte et l'identification approchée de signaux audio, tout en permettant de gérer des bases de données de grande taille.

**EP 2 962 301 B1**

L'art antérieur US 2009/234649 A1 décrit un appareil de génération de signature audio comprenant une analyse de l'énergie du signal, une détection d'événements et un générateur de signature. Cet art antérieur comprend également un appareil pour la comparaison des signatures.

US 2008/263360 permet d'obtenir des hachages robustes pour des contenus multimédia tels que des séquences audio. La séquence audio est subdivisée en trames successives. On calcule une propriété robuste que l'on représente par un bit de hachage correspondant. Ainsi, une séquence audio sera représentée par une concaténation de mots de hachage binaire, à raison d'un par trame.

La présente invention vient améliorer la situation.

Selon un premier aspect de l'invention, on décrit un procédé de génération d'une signature d'un signal audio musical d'une durée donnée, le procédé comprenant les étapes suivantes :

- modélisation du signal audio musical pour obtenir, pour chaque bande de fréquences d'un ensemble de n bandes de fréquences, un diagramme représentant l'énergie du signal audio pour la bande de fréquences, en fonction du temps pendant la durée donnée ;
- détermination d'instants $t_k$ de transition musicale du signal audio pendant la durée donnée ;
- association de chaque instant $t_k$ de transition musicale avec une information locale comprenant un vecteur de n valeurs représentatives respectivement de l'énergie du signal audio dans chacun des n diagrammes obtenus entre l'instant $t_k$ de transition musicale et un instant suivant $t_{k+1}$ de transition musicale et/ou un vecteur de n valeurs représentatives respectivement de l'énergie du signal audio dans chacun des n diagrammes obtenus entre l'instant $t_k$ de transition musicale et un instant précédent $t_{k-1}$ de transition musicale;
- détermination, en fonction de l'information locale associée à chaque instant $t_k$ de transition musicale, d'une clé associée à l'instant de transition musicale, les clés déterminées formant un premier ensemble de clés du signal audio ;
- génération d'une signature du signal audio musical comprenant des couples , chaque couple comprenant une clé du premier ensemble de clés et un instant $t_k$ de transition musicale associé. Les clés du premier ensemble de clés sont obtenues par quantification des vecteurs de n valeurs représentatives respectivement de l'énergie du signal dans chaque bande de fréquences de l'ensemble de n bandes de fréquences dans une période comprise entre l'instant $t_k$ de transition musicale et un instant suivant $t_k+i$ de transition musicale ou par quantification des vecteurs de n valeurs représentatives respectivement de l'énergie du signal dans chaque bande de fréquences de l'ensemble de n bandes de fréquences dans une période comprise entre l'instant $t_k$ de transition musicale et un instant précédent $t_k-i$ de transition musicale.

Le procédé permet ainsi de générer une signature qui est représentative d'informations rythmiques et harmoniques du signal audio musical. Ainsi, les clés obtenues selon le procédé précité peuvent être communes à deux versions d'un même titre audio, et la signature peut être utilisée dans le contexte de l'identification approchée. De plus, la signature étant compacte, elle permet la comparaison efficace sur une durée importante de signal ce qui est notamment nécessaire dans le cadre de l'identification approchée.

On entend par signal audio musical un signal audio de requête (que l'on cherche à identifier) ou un signal audio de référence (pour stockage dans une base de données et pour comparaison ultérieure avec un signal audio de requête).

La quantification utilisée pour générer les clés permet de baisser la sélectivité opérée sur la base de ces clés. En quantifiant des vecteurs de valeurs d'énergie issus de deux signaux similaires mais différents, il est possible d'obtenir deux fois la même clé, et d'ainsi pouvoir identifier un signal de requête de manière approchée.

Selon un mode de réalisation de l'invention, chaque clé du premier ensemble de clés peut être un vecteur de n bits, chaque bit d'index i étant déterminé par comparaison entre la valeur d'énergie d'index i dans le vecteur de n valeurs à partir duquel la clé est déterminée, et la moyenne des valeurs du vecteur de n valeurs.

Ainsi, la quantification appliquée aux valeurs des vecteurs est maximale, ce qui permet d'abaisser la sélectivité des clés tout en conservant une signification d'un point de vue musical (utilisation d'un vecteur de n bits associé à un instant de transition musicale représentatif).

En complément, si la valeur d'énergie d'index i dans le vecteur de n valeurs à partir duquel la clé est déterminée est supérieure à la moyenne des valeurs dudit vecteur de n valeurs, alors le bit d'index i peut être égal à 1, le bit d'index i étant égal à 0 sinon.

Selon un mode de réalisation de l'invention, les instants $t_k$ de transition musicale correspondent aux maxima locaux d'une fonction d'onset calculée à partir du signal audio musical.

On entend par fonction d'onset toute fonction dont le rôle est d'estimer les attaques de notes et les attaques percussives dans un signal audio. A titre d'exemple, une fonction de ce type est décrite dans la publication « Accurate Tempo Estimation Based on Harmonic + Noise Decomposition », de Alonso et Al, 2007.

Une telle réalisation permet d'assurer que les temps de transition musicale sont significatifs d'un point de vue rythmique.

Un deuxième aspect de l'invention concerne un procédé d'identification d'un signal musical, de requête, parmi

3

des signaux musicaux, de référence, le signal de requête et les signaux de référence étant représentés par des signatures respectives obtenues par la mise en oeuvre du procédé selon le premier aspect de l'invention, chaque signature de signal de référence comprenant ainsi un second ensemble de clés auxquelles sont associés des instants respectifs $\tau_k$ de transition musicale, le procédé comprenant les étapes :

- pour chaque signature de signal de référence ayant au moins une clé du second ensemble en commun avec le premier ensemble de clés de la signature du signal de requête, constitution d'un troisième ensemble de clés comprenant la au moins une clé du second ensemble en commun avec le premier ensemble, chaque clé du troisième ensemble étant associée à la fois à l'instant de transition musicale associé à la clé dans la signature du signal de référence, et à l'instant de transition musicale associé à la clé dans la signature du signal de requête ;
- détermination d'un score en fonction d'une correspondance entre chaque paire d'instants de transition musicale associée à chaque clé du troisième ensemble ; et
- sélection d'au moins une signature de signal de référence ayant l'un des scores les plus élevés, en tant que signature d'un signal de référence candidat pour correspondre au signal de requête.

Ce mode de réalisation permet ainsi d'obtenir avec une complexité réduite un sous ensemble de signatures des signaux audio de référence qui sont susceptibles d'identifier de manière quasi exacte ou approchée le signal audio de requête.

En complément, on peut sélectionner un jeu de signatures de signaux de référence ayant des scores les plus élevés, et on peut appliquer un post-traitement :

- à des signaux de référence candidats, représentés par les signatures dudit jeu, et
- au signal de requête,

et une étape d'identification du signal de requête comme l'un des signaux de référence.

Ainsi, il est possible d'appliquer un post-traitement, qui met en oeuvre des calculs généralement complexes, à un ensemble réduit de signaux de référence candidats, ce qui permet de diminuer les ressources requises pour identifier le signal de requête, en comparaison du même post-traitement appliqué à l'ensemble de la base de données.

En variante ou en complément, la détermination du score d'une signature de signal de référence comprend les étapes suivantes:

- détermination d'une fonction affine mettant en correspondance un plus grand nombre d'instants de transition musicale du signal de référence associés aux clés du troisième ensemble avec les instants de transition musicale du signal de requête associés aux clés respectives du troisième ensemble.

Le score attribué à la signature du signal de référence peut alors être égal au plus grand nombre précité.

Une telle réalisation permet de sélectionner avec une complexité réduite des signatures de signaux de référence ayant un score élevé, le score étant représentatif d'une similarité musicale entre les signaux audio.

En complément, la fonction affine peut être obtenue par application d'une transformée de Hough à l'ensemble de paires d'instants de transition musicale associées aux clés du troisième ensemble.

Selon un mode de réalisation, la détermination du score d'un signal audio de référence peut comprendre les étapes suivantes:

- construction d'un nuage de points, chaque point correspondant à une clé du troisième ensemble, l'abscisse du point étant l'instant de transition musicale du signal de référence associé à la clé du troisième ensemble et l'ordonnée du point correspondant à l'instant de transition musicale du signal de requête associé à la clé du troisième ensemble ;
- détermination d'une droite reliant un maximum de points du nuage de points construit ;
- détermination du score de la signature du signal de référence comme étant égal au nombre de points reliés par la droite déterminée dans le nuage de points.

En complément ou en variante, le post-traitement est appliqué successivement pour chaque signal de référence correspondant à une signature sélectionnée, et au signal de requête modifié en fonction de la fonction affine déterminée pour l'obtention du score de la signature du signal de référence.

Ainsi, ce mode de réalisation permet de tirer profit d'informations issues de l'étape d'obtention d'une fonction affine (pouvant être la droite dans le nuage de points précédemment introduit), dans le cadre du post-traitement, améliorant ainsi l'efficacité du procédé d'identification.

En complément, le signal de requête est modifié par mise à l'échelle du signal de requête en fonction d'une pente de la fonction affine et par recadrage temporel du signal de requête en fonction d'une ordonnée à l'origine de la fonction affine.

Un tel mode de réalisation permet d'assurer que le signal audio de référence et le signal audio de requête modifié sont comparés avec un même étirement temporel et partant du même instant de départ.

Un troisième aspect de l'invention concerne un programme d'ordinateur comportant des instructions pour la mise en oeuvre du procédé selon le premier aspect de l'invention, lorsque ce programme est exécuté par un processeur.

Un quatrième aspect de l'invention concerne un programme d'ordinateur comportant des instructions pour la mise en oeuvre du procédé selon le deuxième aspect de l'invention, lorsque ce programme est exécuté par un processeur.

Un cinquième aspect de l'invention concerne un dispositif de génération d'une signature d'un signal audio musical d'une durée donnée, le dispositif comprenant :

- une unité de modélisation du signal audio musical pour obtenir, pour chaque bande de fréquences d'un ensemble de n bandes de fréquences, un diagramme représentant l'énergie du signal audio pour la bande de fréquences, en fonction du temps pendant la durée donnée ;
- une première unité de détermination d'instants $t_k$ de transition musicale du signal audio pendant la durée donnée ;
- une unité d'association de chaque instant $t_k$ de transition musicale avec une information locale comprenant un vecteur de n valeurs représentatives respectivement de l'énergie du signal audio dans chacun des n diagrammes obtenus entre l'instant $t_k$ de transition musicale et un instant suivant $t_{k+1}$ de transition musicale et/ou un vecteur de n valeurs représentatives respectivement de l'énergie du signal audio dans chacun des n diagrammes obtenus entre l'instant $t_k$ de transition musicale et un instant précédent $t_{k-1}$ de transition musicale;

- une deuxième unité de détermination, en fonction de l'information locale associée à chaque instant $t_k$ de transition musicale, d'une clé associée à l'instant de transition musicale, les clés déterminées formant un premier ensemble de clés du signal audio ;
- une unité de génération d'une signature du signal audio musical comprenant des couples, chaque couple comprenant une clé du premier ensemble de clés et un instant $t_k$ de transition musicale associé.

Un sixième aspect de l'invention concerne un dispositif d'identification d'un signal musical, de requête, parmi des signaux musicaux, de référence, le signal de requête et les signaux de référence étant représentés par des signatures respectives obtenues par la mise en oeuvre du procédé selon le premier aspect de l'invention, chaque signature de signal de référence comprenant ainsi un second ensemble de clés auxquelles sont associés des instants respectifs $\tau_k$ de transition musicale, le dispositif comprenant :

- une unité de constitution, pour chaque signature de signal de référence ayant au moins une clé du second ensemble en commun avec le premier ensemble de clés de la signature du signal de requête, d'un troisième ensemble de clés comprenant la au moins une clé du second ensemble en commun avec le premier ensemble, chaque clé du troisième ensemble étant associée à la fois à l'instant de transition musicale associé à la clé dans la signature du signal de référence, et à l'instant de transition musicale associé à la clé dans la signature du signal de requête ;
- une unité de détermination d'un score en fonction d'une correspondance entre chaque paire d'instants de transition musicale associée à une clé du troisième ensemble ; et
- une unité de sélection d'au moins une signature de signal de référence ayant l'un des scores les plus élevés, en tant que signature d'un signal de référence candidat pour identifier le signal de requête.

D'autres caractéristiques et avantages de l'invention apparaîtront à l'examen de la description détaillée ci-après, et des dessins annexés sur lesquels:

- la figure 1 illustre un procédé de génération d'une signature d'un signal audio musical d'une durée donnée selon l'invention ;
- la figure 2 présente une superposition d'une fonction d'onset calculée à partir d'un signal audio musical et d'un chromagramme déterminé à partir du même signal audio musical, selon l'invention ;
- la figure 3 illustre un procédé d'identification d'un signal audio musical, de requête, parmi des signaux audio musicaux, de référence, le signal audio de requête et les signaux audio de référence étant représentés par des signatures respectives obtenues par la mise en oeuvre du procédé selon la figure 1 ;
- la figure 4 est un diagramme temps/temps représentant un nuage de points selon un mode de réalisation de l'invention ;
- la figure 5 illustre un dispositif de génération d'une signature d'un signal audio musical d'une durée donnée, selon une réalisation de l'invention ;
- la figure 6 présente un dispositif d'identification 600 d'un signal audio musical, de requête, parmi des signaux audio musicaux, de référence, le signal audio de requête et les signaux de référence étant représentés par des signatures respectives obtenues par la mise en œuvre du procédé selon la figure 1, selon l'invention.

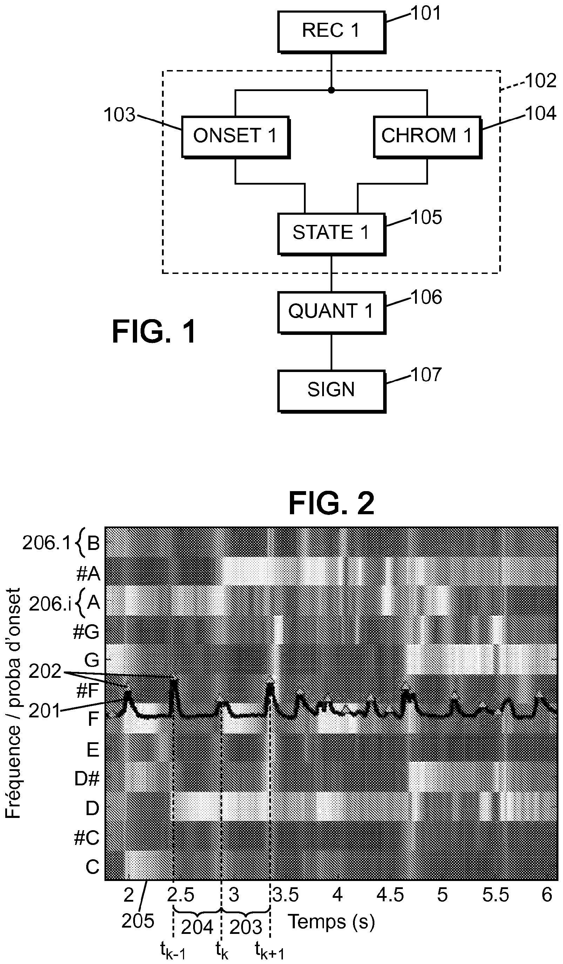

La figure 1 illustre un procédé de génération d'une signature d'un signal audio musical d'une durée donnée selon l'invention.

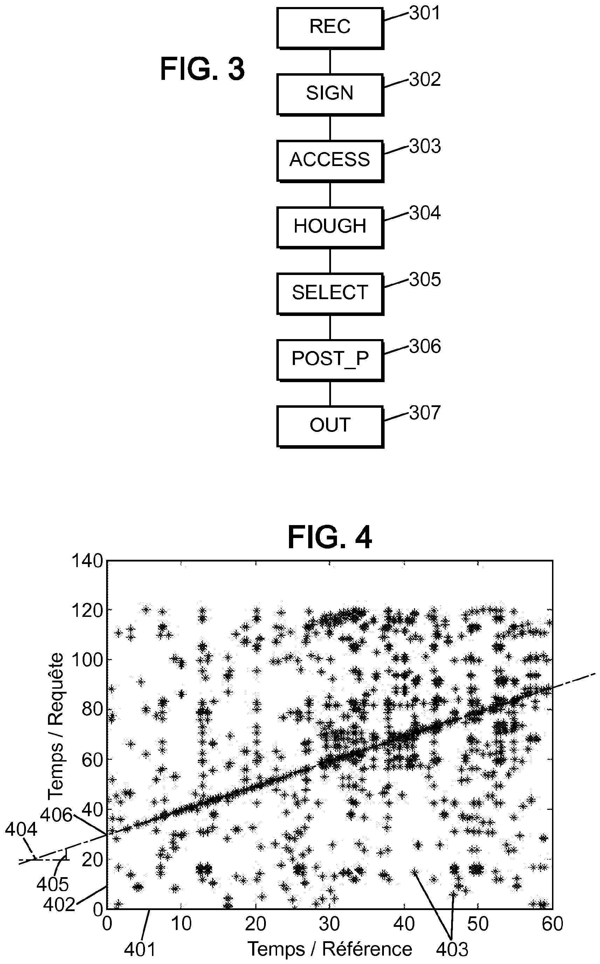

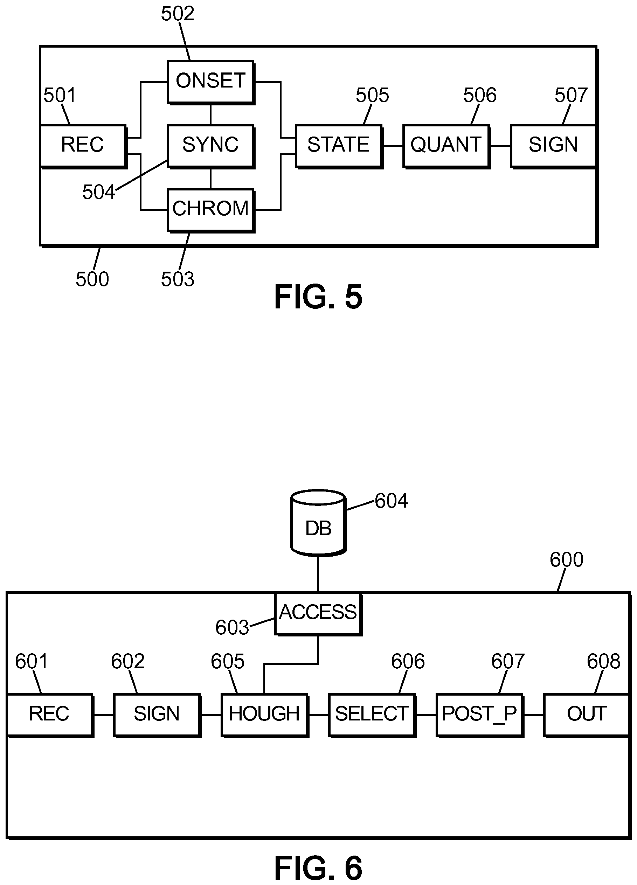

A une étape 101, un signal audio musical est reçu par un dispositif de génération de signature selon l'invention, qui sera illustré ultérieurement en référence à la figure 5. Un tel signal audio musical peut correspondre à un signal audio pour lequel l'utilisateur aimerait accéder à des métadonnées, telles que le nom de l'artiste ou le titre. Un tel signal audio est appelé signal audio de requête. Le signal audio musical peut également correspondre à un signal audio de référence dont la signature est destinée à être stockée dans une base de données en vue d'une comparaison ultérieure avec une signature de signal audio de requête (comme détaillé dans ce qui suit en référence à la figure 3) en vue d'une identification du signal audio de requête.

Comme expliqué précédemment, l'invention vise à permettre non seulement l'identification quasi-exacte (à savoir la recherche efficace d'un extrait audio dans une base importante avec robustesse aux distorsions) mais également l'identification approchée (à savoir le rapprochement d'un extrait audio avec un signal audio de référence qui lui est similaire au sein d'une base importante).

A partir du signal audio musical reçu, une étape de détermination d'états du signal audio musical est effectuée en référence à l'étape 102.

L'étape 102 comprend, à une étape 103, la détermination d'instants $t_k$ de transition musicale du signal audio musical, pendant la durée donnée du signal audio musical.

En parallèle de l'étape 103, à une étape 104, l'étape de détermination d'états comprend la modélisation du signal audio musical pour obtenir, pour chaque bande de fréquences d'un ensemble de n bandes de fréquences, un diagramme représentant l'énergie du signal audio de requête pour la bande de fréquences en question, en fonction du temps pendant la durée donnée précitée.

Les étapes 103 et 104 seront mieux comprises en référence à la figure 2, qui présente une superposition d'une fonction d'onset 201 calculée à partir du signal audio musical et d'un chromagramme 205 déterminé à partir du signal audio musical. A noter que la détermination du chromagramme 205 et de la fonction d'onset 201 peuvent requérir tous les deux l'application d'une transformée de Fourier au signal audio de requête, avec des fenêtrages différents. Afin d'éviter tout décalage temporel entre la fonction d'onset 201 et le chromagramme 205, l'invention peut prévoir de synchroniser les transformées de Fourier.

La présente invention peut par exemple prévoir de détecter les instants $t_k$ de transition musicale comme correspondant aux maxima locaux 202 de la fonction d'onset.

Le chromagramme 205 est constitué des n diagrammes 206.i, i variant de 1 à n, illustrant l'énergie du signal audio musical pour chaque bande de fréquences. Plus l'énergie est importante, plus le chromagramme est clair.

Le procédé selon l'invention comprend ensuite une étape 105 de définition d'états du signal audio musical. Un état $s_k$ est défini par l'association d'un instant $t_k$ avec une information locale $i_k$ :

$$s_k = (t_k, i_k).$$

L'information locale $i_k$ peut être donnée par les caractéristiques suivantes :

$$i_k = (c_{k,l}, c_{k,r})$$

dans lequel $c_{k,l}$ est un vecteur chromatique moyen à gauche de $t_k$ et $c_{k,r}$ est un vecteur chromatique moyen à droite de $t_k$.

Le vecteur $c_{k,r}$ est un vecteur de n valeurs représentatives respectivement de l'énergie du signal audio musical dans chacun des n diagrammes 206 obtenus dans la période 203 entre l'instant $t_k$ de transition musicale et un instant suivant $t_{k+1}$ de transition musicale. Le vecteur $c_{k,l}$ est un vecteur de n valeurs représentatives respectivement de l'énergie du signal audio de requête dans chacun des n diagrammes 206.i obtenus dans la période 204 entre l'instant $t_k$ de transition musicale et un instant précédent $t_{k-1}$ de transition musicale. Par exemple, la composante d'index i du vecteur $c_{k,r}$ (notée $c_{k,r,i}$ ci-après) correspond à la moyenne de l'énergie de la bande de fréquences représentée par le diagramme 206.i sur la période 203 et la composante d'index i du vecteur $c_{k,l}$ (notée $c_{k,l,i}$ ci-après) correspond à la moyenne de l'énergie de la bande de fréquence représentée par le diagramme 206.i sur la période 204.

A noter que l'information locale $i_k$ peut correspondre uniquement au vecteur chromatique moyen $c_{k,r}$ à droite de $t_k$ ou au vecteur chromatique moyen $c_{k,l}$ à gauche de $t_k$.

L'avantage de la définition d'états présentée ci-dessus est que le signal audio de requête est représenté sous une forme compacte et représentative d'informations rythmiques et harmoniques du signal audio musical. Ainsi, la présente invention permet des applications d'identification quasi-exacte mais également d'identification approchée d'un signal audio de requête.

Le procédé selon l'invention comprend ensuite une étape 106 de détermination, en fonction de l'information locale associée à chaque instant $t_k$ de transition musicale, d'une clé associée à l'instant $t_k$ de transition musicale, les clés déterminées formant un premier ensemble de clés du signal audio musical.

Il convient de générer un premier ensemble de clés qui soient invariantes aux variations du signal audio musical et suffisamment discriminantes. L'invariance aux variations doit couvrir les distorsions classiques en post-traitement (égalisation, décalage de pitch, etc) mais également les enregistrements d'un même titre dans des conditions différentes (correspondance de signaux audio similaires).

Selon l'invention, une clé peut être déterminée pour chaque état $s_k$ déterminé du signal audio musical, et peut correspondre à une version quantifiée de l'un des vecteurs $c_{k,l}$ et $c_{k,r}$. Dans ce qui suit, on prend l'exemple d'une version quantifiée du vecteur $c_{k,r}$. Chaque composante $c_{k,r,i}$ du vecteur $c_{k,r}$ peut par exemple être quantifiée à l'aide d'un seul bit $\tilde{c}_{k,r,i}$, de la manière suivante :

$$\tilde{c}_{k,r,i} = \begin{cases} 1 \text{ si } c_{k,r,i} > \overline{c}_{k,r} \\ \\ 0 \text{ sinon} \end{cases}$$

avec $\overline{c}_{k,r}$ correspondant à la moyenne des $c_{k,r,i}$ pour $i$ variant entre 1 et n.

Ainsi, la quantification du vecteur $c_{k,r}$ est déterministe. L'invention peut également prévoir, afin de limiter le risque de modifier une clé à ce stade du procédé, de générer un jeu probabiliste de vecteurs $\tilde{c}_{k,r}$ binaires, associés à leurs probabilités respectives.

Chaque vecteur binaire $\tilde{c}_{k,r}$ constitue une clé du signal audio musical, et est stocké en association avec le temps $t_k$ de transition musicale.

Le premier ensemble de clés ainsi générées et les instants $t_k$ respectivement associés à ces clés forment alors une signature du signal audio musical, à une étape 107.

Une telle signature selon l'invention contient des informations rythmiques et harmoniques sur le signal audio musical, permettant ainsi l'identification approchée aussi bien que l'identification quasi-exacte. Un tel procédé de génération de signature est appliqué à la fois au signal audio de requête, mais également aux signaux audio de référence en vue du stockage de leurs signatures respectives dans une base de données.

Lorsque le procédé décrit ci-avant est appliqué à un signal audio de référence, on prévoit en outre la définition d'une fonction d'index. On appelle fonction d'index, une fonction qui prend une clé en entrée et qui retourne un jeu de valeurs.

L'intérêt d'une telle opération est qu'elle est potentiellement réalisable avec une complexité O(1). Dans notre cas, les valeurs sont des pointeurs sur les signaux audio de référence de la base de données et les clés sont des caractéristiques audio qui caractérisent ces signaux audio de référence.

Ainsi, lorsque le procédé de génération de signature a été appliqué à tous les signaux audio de référence, les clés de toutes les références sont extraites et stockées dans l'index. Ainsi, les valeurs d'une clé correspondent aux identifiants des signaux audio de référence ainsi que les temps $t_k$ de transition musicale correspondant à la clé dans ces signaux audio de référence.

La figure 3 illustre un procédé d'identification d'un signal musical, de requête, parmi des signaux musicaux, de référence, le signal de requête et les signaux de référence étant représentés par des signatures respectives obtenues par la mise en œuvre du procédé selon la figure 1.

A une étape 301, un signal audio de requête est reçu par un dispositif d'identification qui sera présenté ultérieurement en référence à la figure 6.

A une étape 302, une signature du signal audio de requête est obtenue, par application du procédé selon la figure 1 au signal audio de requête. La signature comprend ainsi un premier ensemble de clés K associées respectivement à des instants $t_k$ de transition musicale (à noter que l'indice k des instants de transition musicale, est indépendant du symbole K représentant une clé).

A une étape 303, on accède à une base de données comprenant les signatures des signaux audio de référence, en vue de constituer, à l'aide de la fonction d'index, et pour chaque signature de signal de référence ayant au moins une clé du second ensemble en commun avec le premier ensemble de clés de la signature du signal de requête, un troisième ensemble de clés comprenant les clés du second ensemble en commun avec le premier ensemble. A noter qu'une clé K du troisième ensemble peut être associée à plusieurs instants de transition musicale dans le premier ensemble et/ou à plusieurs instants de transition musicale dans le second ensemble.

Le procédé comprend ensuite une étape 304 de détermination d'un score en fonction d'une correspondance entre chaque paire d'instants de transition musicale associée à une clé du troisième ensemble. La détermination du score est effectuée pour chaque signature de signal de référence comprenant au moins une clé en commun avec le premier ensemble de clés de la signature du signal audio de requête. La détermination du score peut par exemple consister en la détermination d'une fonction affine mettant en correspondance un plus grand nombre d'instants de transition musicale du signal de référence associés aux clés du troisième ensemble avec les instants de transition musicale du signal de requête associés aux mêmes clés du troisième ensemble, le score attribué à la signature du signal de référence étant égal au plus grand nombre précité.

Un exemple détaillé de détermination du score d'une signature de signal de référence, à partir du troisième ensemble de clés commune à cette signature de signal de référence et à la signature du signal de requête, est illustré en référence à la figure 4.

La figure 4 est un diagramme temps/temps représentant un nuage de points 403, chaque point correspondant à une clé du troisième ensemble, l'abscisse 401 du point étant l'instant de transition musicale du signal de référence associé à la clé du troisième ensemble et l'ordonnée 402 du point correspondant à l'instant de transition musicale du signal de requête associé à la clé du troisième ensemble. On construit ainsi un nuage de points par signature de signal de référence qui partage au moins une clé en commun avec la signature du signal de requête.

A partir de ce nuage de points, on détermine une droite 404 reliant un maximum de points du nuage de points construit. La détermination de la droite 404 peut être effectuée par application d'un algorithme de Hough à l'ensemble de paires d'instants de transition musicale associées aux clés du troisième ensemble.

Le score de la signature du signal de référence pour lequel le nuage de points a été construit peut alors être égal au nombre de points reliés par la droite 404 déterminée dans le nuage de points. Sur la figure 4, on remarque qu'une droite 404 comprenant un grand nombre de points est obtenue. Le fait que de nombreux points soient situés en dehors de la droite s'explique par le fait qu'une clé du premier ensemble peut être présente plusieurs fois dans le deuxième ensemble. Ceci traduit la répétition d'une clé dans le titre représenté par le signal audio de référence. Il faut en outre garder à l'esprit que, de par la quantification très forte appliquée pour déterminer les clés, ces dernières ne sont pas très discriminantes (ce qui est volontaire, et utile pour permettre l'identification approchée du signal audio de requête).

A une étape 305, on sélectionne au moins une signature de signal de référence ayant l'un des scores les plus élevés, en tant que signature d'un signal de référence candidat pour correspondre au signal de requête. Par exemple, l'invention peut prévoir de sélectionner M signatures de signaux de référence candidats, M pouvant être prédéterminé ou pouvant dépendre du nombre de clés du premier ensemble de clés de la signature du signal de requête, par exemple. Aucune restriction n'est attachée à la valeur de M.

A une étape 306, on sélectionne un jeu de signatures de signaux de référence ayant des scores les plus élevés, et on applique un post-traitement :

- à des signaux de référence candidats, représentés par les signatures du jeu, et
- au signal de requête,

en vue d'identifier le signal de requête comme l'un des signaux de référence. Le jeu de signatures peut par exemple comprendre les M signatures précitées.

Une telle étape de post-traitement peut mettre en œuvre des calculs complexes, sans pour autant mobiliser des ressources trop importantes, dans la mesure où la base de données de signaux de référence a été réduite à M signaux de référence candidats.

Un exemple de post-traitement est décrit ci-après. Toutefois, l'invention n'est aucunement restreinte à cet exemple, et toute méthode connue pourra être appliquée afin de sélectionner l'un des signaux audio de référence candidats comme identifiant le signal audio de requête. L'état de l'art propose de nombreuses techniques à cet effet.

A ce stade du procédé, il convient de comparer les M signaux audio de référence sélectionnés avec le signal audio de requête.

A titre d'exemple, il est proposé ci-après une approche de programmation dynamique qui repose sur la modélisation des signaux audio par états telle que précédemment décrite.

Tout d'abord, pour chaque signature de signal de référence possédant des clés en commun avec le premier ensemble de clés, le signal audio de requête peut être modifié en fonction de la fonction affine déterminée pour l'obtention du score de la signature du signal de référence.

En effet, la droite 404 définit une fonction affine caractérisée par une pente référencée 405 sur la figure 4 et notée a, et par une ordonnée à l'origine référencée 406 et notée b. La droite 404 signifie qu'une clé extraite du signal audio de requête à un instant t, correspondra à une clé dans le signal audio de référence à l'instant $a(t-b)$.

L'inverse de a représente alors un étirement temporel du signal audio de requête tandis que b représente l'instant dans le signal audio de référence auquel commence le signal audio de requête. Ainsi, le signal audio de requête peut être modifié par mise à l'échelle du signal de requête en fonction de la pente a et par recadrage temporel du signal audio de requête en fonction de l'ordonnée à l'origine b.

Le signal audio de requête ainsi modifié est représenté par la séquence d'états $\{s_1...s_i...s_m\}$, m étant le nombre d'instants de transition musicale déterminé précédemment dans l'intervalle de temps correspondant à la durée du signal audio du requête. Pour représenter les états des signaux de référence candidats, on utilise dans ce qui suit la notation $\{\sigma_1... \sigma_j...\sigma_p\}$, p étant le nombre d'instants de transition musicale dans le signal de référence candidat considéré, p étant dépendant du signal de référence candidat.

Afin de dynamiquement aligner deux séquences d'états, il convient de définir trois types de pénalités :

$f^d(s_i)$ : pénalité assignée pour la suppression de l'état $s_i$ ;

$f^i(s_i)$ : pénalité assignée à l'insertion de l'état $s_i$ ;

$f^s(s_i, \sigma_j)$ : pénalité assignée au remplacement de l'état $s_i$ par l'état $\sigma_j$.

A titre d'exemple, les fonctions $f^d$ et $f^i$ peuvent toutes deux prendre une valeur constante égale à 0.3.

Sachant que $s_i = (t_i,(C_{i,l},c_{i,r}))$ et $\sigma_j = (\tau_j,(\gamma_{j,l},\gamma_{j,r}))$, en notant $\tau_j$ l'instant de transition musicale d'indice j dans le signal de référence, $\gamma_{j,l}$ le vecteur chromatique moyen à gauche de $\tau_j$, et $\gamma_{j,r}$ le vecteur chromatique moyen à droite de $\tau_j$, on définit $f^s$ par :

$$f^s(s_i,\sigma_j) = \cos(c_{i,l},\gamma_{j,l}).\cos(c_{i,r},\gamma_{j,r}).e^{\frac{|t_i-\tau_j|}{c}}$$

Le premier terme en cosinus pénalise la ressemblance du vecteur chromatique moyen à gauche de $t_i$ avec le vecteur chromatique moyen à gauche de $\tau_j$. Le second terme en cosinus pénalise la ressemblance du vecteur chromatique moyen à droite de $t_i$ avec le vecteur chromatique moyen à droite de $\tau_j$. Le terme exponentiel pénalise l'erreur temporelle entre l'occurrence de l'état $s_i$ dans le signal de requête modifié, et l'occurrence de l'état $\sigma_j$ dans le signal de référence.

Une programmation dynamique consiste à remplir de manière itérative une matrice D. Pour chaque couple (i,j) $\in \{1..m\}\times\{1..p\}$, D(i,j) contient le score de l'alignement de la sous-séquence $\{s_1...s_i\}$ avec la sous séquence $\{\sigma_1.. \sigma_j\}$. D est calculée de la manière suivante :

$$D(i,j) = \max\begin{cases} D(i,j-1).f^d(\sigma_j) \\ D(i-1,j-1).f^s(s_i,\sigma_j) \\ D(i-1,j).f^i(s_i) \end{cases}$$

Le score de l'alignement de $\{s_1...s_m\}$ avec $\{\sigma_1.. \sigma_p\}$ est finalement donné par D(m,p).

A une étape 307, à l'issue du post-traitement, le signal audio de requête est identifié de manière quasi-exacte ou approchée comme correspondant au signal audio de référence ayant le score D(m,p) le plus élevé. Une telle identification peut par ailleurs être conditionnée par une étape de comparaison avec un seuil prédéterminé : si le score D(m,p) le plus élevé est inférieur à ce seuil, aucune identification n'est obtenue pour le signal audio de requête.

La figure 5 présente un dispositif 500 de génération d'une signature d'un signal audio musical d'une durée donnée.

A cet effet, le dispositif 500 comprend une unité de réception 501 d'un signal audio musical. Comme précédemment décrit, le signal audio musical peut être un signal audio de requête ou de référence.

Le dispositif 500 comprend en outre une unité de modélisation 502 du signal audio musical pour obtenir, pour chaque bande de fréquences d'un ensemble de n bandes de fréquences, un diagramme représentant l'énergie du signal audio pour la bande de fréquences, en fonction du temps pendant la durée donnée. Les diagrammes obtenus peuvent être regroupés sous la forme du chromagramme 205 illustré sur la figure 2. En particulier, l'unité de modélisation 502 est apte à mettre en œuvre l'étape 104 du procédé illustré en figure 1.

Le dispositif 500 comprend une première unité de détermination 502 d'instants $t_k$ de transition musicale du signal audio pendant la durée donnée, qui est apte à mettre en œuvre l'étape 103 du procédé illustré en figure 1.

Afin de synchroniser les opérations effectuées par les unités 502 et 503, le dispositif 500 comprend une unité de synchronisation 504 apte à mettre en œuvre l'étape 104 du procédé illustré en figure 1.

Le dispositif 500 comprend une unité d'association 505 de chaque instant $t_k$ de transition musicale avec une information locale comprenant un vecteur de n valeurs représentatives respectivement de l'énergie du signal audio dans chacun des n diagrammes obtenus entre l'instant $t_k$ de transition musicale et un instant suivant $t_{k+1}$ de transition musicale

et/ou un vecteur de n valeurs représentatives respectivement de l'énergie du signal audio dans chacun des n diagrammes obtenus entre l'instant $t_k$ de transition musicale et un instant précédent $t_{k-1}$ de transition musicale. L'unité d'association 505 est apte à mettre en œuvre l'étape 105 du procédé illustré en figure 1.

Le dispositif 500 comprend en outre une deuxième unité de détermination 506, en fonction de l'information locale associée à chaque instant $t_k$ de transition musicale, d'une clé associée à l'instant de transition musicale, les clés déterminées formant un premier ensemble de clés du signal audio. L'unité de détermination 506 est apte à mettre en œuvre l'étape 106 du procédé illustré en figure 1.

Le dispositif 500 comprend une unité de génération 507 d'une signature du signal audio musical comprenant des couples de clés du premier ensemble de clés et d'instants $t_k$ de transition musicale associés, qui est apte à mettre en œuvre l'étape 107 du procédé illustré en figure 1. L'unité de génération 507 peut en outre être apte à transmettre le signal audio musical ainsi que la signature générée à une entité distante.

Par exemple, lorsque le signal audio musical est un signal audio de requête, il peut être transmis avec la signature générée à un serveur distant en charge d'identifier le signal audio de requête, ou plus généralement à un dispositif selon la figure 6. Dans ce cas le dispositif 500 peut être inclus dans un terminal utilisateur tel qu'un terminal mobile de télécommunications, un ordinateur portable ou fixe, etc.

En variante, lorsque le signal audio musical est un signal audio de référence, il peut être transmis avec la signature générée à une base de données de référence apte à stocker le signal audio de référence en association avec la signature générée.

La figure 6 illustre un dispositif d'identification 600 d'un signal musical, de requête, parmi des signaux musicaux, de référence, le signal de requête et les signaux de référence étant représentés par des signatures respectives obtenues par la mise en œuvre du procédé selon la figure 1. A cet effet, le dispositif 600 peut être relié au dispositif 500 et peut ainsi recevoir par une unité de réception 601 un signal audio de requête accompagné d'une signature. Dans ce cas, une unité 602 extrait la signature du signal audio de requête pour communication à une unité de constitution 603, décrite dans ce qui suit. En variante, l'unité de réception 601 peut recevoir un signal audio de requête sans signature, la signature étant générée par une unité 602. L'unité 602 peut ainsi correspondre au dispositif de génération de signature 500 et peut transmettre la signature générée à l'unité de constitution 603.

En outre, le dispositif 600 peut être relié à une base de données 604 stockant des signatures respectivement associées à des signaux audio de référence. Dans la base de données 604, chaque signature de signal de référence comprend ainsi un second ensemble de clés auxquelles sont associés des instants respectifs $\tau_k$ de transition musicale. Selon l'invention, la base de données 604 peut être intégrée dans le dispositif 600.

Le dispositif 600 comprend l'unité de constitution 603, qui accède à la base de données 604 et qui, pour chaque signature de signal de référence ayant au moins une clé du second ensemble en commun avec le premier ensemble de clés de la signature du signal de requête, constitue un troisième ensemble de clés comprenant les clés du second ensemble en commun avec le premier ensemble, chaque clé du troisième ensemble étant associée à la fois à l'instant de transition musicale associé à la clé dans la signature du signal de référence et à l'instant de transition musicale associé à la clé dans la signature du signal de requête. L'unité de constitution 603 est apte à mettre en œuvre l'étape 303 du procédé selon la figure 3.

Le dispositif 600 comprend en outre une unité de détermination 605 d'un score en fonction d'une correspondance entre chaque paire d'instants de transition musicale associée à une clé du troisième ensemble, qui est apte à mettre en œuvre l'étape 304 du procédé selon la figure 3.

Le dispositif 600 comprend une unité de sélection 606 d'au moins une signature de signal de référence ayant l'un des scores les plus élevés, en tant que signature d'un signal de référence candidat pour identifier le signal de requête. L'unité de sélection 606 est apte à mettre en œuvre l'étape 305 du procédé selon la figure 3.

Le dispositif comprend en outre une unité de post-traitement 607 apte à mettre en œuvre l'étape 306 du procédé selon la figure 3, afin de déterminer parmi un ensemble de signaux de référence candidats, le signal audio de référence identifiant le signal audio de requête. L'unité 607 peut en outre ne retourner aucun résultat lorsque le score le plus élevé d'un signal audio de référence est inférieur au seuil introduit précédemment.

Le dispositif 600 comprend une unité de transmission 608 pour retourner le signal audio de référence identifiant le signal audio de requête, à un terminal utilisateur ou à une unité d'affichage du dispositif 600, non représentée sur la figure 6.

L'invention prévoit également le cas où le dispositif 600 ne comprend pas l'unité 306. Dans ce cas, l'unité de transmission 608 transmet les signaux de requêtes candidats à une entité distante apte à comprendre l'unité 306, ce qui est particulièrement avantageux dans les cas où le dispositif 600 possède des capacités de calcul réduites.

A noter que le dispositif 500 selon la figure 5 et le dispositif 600 selon la figure 6 peuvent être regroupés au sein d'un même dispositif global (lorsque le dispositif 500 remplace l'unité 602 du dispositif 600). Le dispositif global peut alors être utilisé dans un terminal utilisateur ou dans un serveur distant accessible depuis un terminal utilisateur. Dans ce dernier cas, le terminal utilisateur transmet au serveur distant un signal de requête.

La présente invention prévoit également un programme d'ordinateur comportant des instructions pour la mise en œuvre du procédé illustré en figure 1, lorsque ce programme est exécuté par un processeur, et un programme d'ordinateur comportant des instructions pour la mise en œuvre du procédé illustré en figure 3, lorsque ce programme est exécuté par un processeur.

**Revendications**

1. Procédé de génération d'une signature d'un signal audio musical d'une durée donnée, le procédé comprenant les étapes suivantes :

   - modélisation (104) dudit signal audio musical pour obtenir, pour chaque bande de fréquences d'un ensemble de n bandes de fréquences, n étant strictement supérieur à 1, un diagramme représentant l'énergie du signal audio pour ladite bande de fréquences, en fonction du temps pendant ladite durée donnée ;
   - détermination (103) d'instants $t_k$ de transition musicale du signal audio pendant la durée donnée, les instants $t_k$ de transition musicale correspondent aux maxima locaux d'une fonction d'onset calculée à partir du signal audio musical ;
   - association (105) de chaque instant $t_k$ de transition musicale avec une information locale comprenant un vecteur de n valeurs représentatives respectivement de l'énergie du signal audio dans chacun des n diagrammes obtenus entre l'instant $t_k$ de transition musicale et un instant suivant $t_{k+1}$ de transition musicale et/ou un vecteur de n valeurs représentatives respectivement de l'énergie du signal audio dans chacun des n diagrammes obtenus entre l'instant $t_k$ de transition musicale et un instant précédent $t_{k-1}$ de transition musicale;
   - détermination (106), en fonction de l'information locale associée à chaque instant $t_k$ de transition musicale, d'une clé associée audit instant de transition musicale, les clés déterminées formant un premier ensemble de clés du signal audio ;
   - génération (107) d'une signature du signal audio musical comprenant des couples, chaque couple comprenant une clé du premier ensemble de clés et un 'instant $t_k$ de transition musicale associé,

   dans lequel les clés du premier ensemble de clés sont obtenues par quantification des vecteurs de n valeurs représentatives respectivement de l'énergie du signal dans chaque bande de fréquences de l'ensemble de n bandes de fréquences dans une période comprise entre l'instant $t_k$ de transition musicale et un instant suivant $t_{k+1}$ de transition musicale ou par quantification des vecteurs de n valeurs représentatives respectivement de l'énergie du signal dans chaque bande de fréquences de l'ensemble de n bandes de fréquences dans une période comprise entre l'instant $t_k$ de transition musicale et un instant précédent $t_{k-1}$ de transition musicale.

2. Procédé selon la revendication 1, dans lequel chaque clé du premier ensemble de clés est un vecteur de n bits, chaque bit d'index i étant déterminé par comparaison entre la valeur d'énergie d'index i dans le vecteur de n valeurs à partir duquel ladite clé est déterminée, et la moyenne des valeurs dudit vecteur de n valeurs.

3. Procédé selon la revendication 2, dans lequel si la valeur d'énergie d'index i dans le vecteur de n valeurs à partir duquel la clé est déterminée est supérieure à la moyenne des valeurs dudit vecteur de n valeurs, alors le bit d'index i est égal à 1, le bit d'index i étant égal à 0 sinon.

4. Procédé d'identification d'un signal musical, de requête, parmi des signaux musicaux, de référence, le signal de requête et les signaux de référence étant représentés par des signatures respectives obtenues par la mise en œuvre du procédé selon l'une des revendications 1 à 3, chaque signature de signal de référence comprenant ainsi un second ensemble de clés auxquelles sont associés des instants respectifs $\tau_k$ de transition musicale, ledit procédé comprenant les étapes :

   - pour chaque signature de signal de référence ayant au moins une clé du second ensemble en commun avec le premier ensemble de clés de la signature du signal de requête, constitution (303) d'un troisième ensemble de clés comprenant la au moins une clé du second ensemble en commun avec le premier ensemble, chaque clé du troisième ensemble étant associée à la fois à l'instant de transition musicale associé à la clé dans la signature du signal de référence, et à l'instant de transition musicale associé à la clé dans la signature du signal de requête ;
   - détermination (304) d'un score en fonction d'une correspondance entre chaque paire d'instants de transition musicale associée à une clé du troisième ensemble ; et
   - sélection (305) d'au moins une signature de signal de référence ayant l'un des scores les plus élevés, en tant que signature d'un signal de référence candidat pour correspondre au signal de requête.

**5.** Procédé selon la revendication 4, dans lequel on sélectionne un jeu de signatures de signaux de référence ayant des scores les plus élevés, et on applique un post-traitement (306) :

- à des signaux de référence candidats, représentés par les signatures dudit jeu, et
- au signal de requête,

et comprenant une étape d'identification du signal de requête comme l'un des signaux de référence.

**6.** Procédé selon l'une des revendications 4 et 5, dans lequel la détermination (304) du score d'une signature de signal de référence comprend les étapes suivantes:

- détermination d'une fonction affine mettant en correspondance un plus grand nombre d'instants de transition musicale du signal de référence associés aux clés du troisième ensemble avec les instants de transition musicale du signal de requête associés aux clés respectives du troisième ensemble ;

dans lequel le score attribué à la signature du signal de référence est égal audit plus grand nombre.

**7.** Procédé selon la revendication 6, dans lequel la fonction affine est obtenue par application d'une transformée de Hough à l'ensemble de paires d'instants de transition musicale associés aux clés du troisième ensemble.

**8.** Procédé selon l'une des revendications 4 à 7, dans lequel la détermination (304) du score d'un signal audio de référence comprend les étapes suivantes:

- construction d'un nuage de points (403), chaque point correspondant à une clé du troisième ensemble, l'abscisse (401) du point étant l'instant de transition musicale du signal de référence associé à la clé du troisième ensemble et l'ordonnée (402) du point correspondant à l'instant de transition musicale du signal de requête associé à la clé du troisième ensemble ;
- détermination d'une droite (404) reliant un maximum de points du nuage de points construit ;
- détermination du score de la signature du signal de référence comme étant égal au nombre de points reliés par ladite droite déterminée dans le nuage de points.

**9.** Procédé selon la revendication 6 ou 7, dans lequel le post-traitement (306) est appliqué successivement pour chaque signal de référence correspondant à une signature sélectionnée, et au signal de requête modifié en fonction de la fonction affine déterminée pour l'obtention du score de la signature du signal de référence.

**10.** Procédé selon la revendication 9, dans lequel le signal de requête est modifié par mise à l'échelle dudit signal de requête en fonction d'une pente (405) de la fonction affine et par recadrage temporel dudit signal de requête en fonction d'une ordonnée à l'origine (406) de la fonction affine.

**11.** Programme d'ordinateur comportant des instructions pour la mise en œuvre du procédé selon l'une des revendications 1 à 3, lorsque ce programme est exécuté par un processeur.

**12.** Programme d'ordinateur comportant des instructions pour la mise en œuvre du procédé selon l'une des revendications 4 à 10, lorsque ce programme est exécuté par un processeur.

**13.** Dispositif de génération d'une signature d'un signal audio musical d'une durée donnée, le dispositif (500) comprenant :

- une unité de modélisation (503) dudit signal audio musical pour obtenir, pour chaque bande de fréquences d'un ensemble de n bandes de fréquences, n étant strictement supérieur à 1, un diagramme représentant l'énergie du signal audio pour ladite bande de fréquences, en fonction du temps pendant ladite durée donnée ;
- une première unité de détermination (502) d'instants $t_k$ de transition musicale du signal audio pendant la durée donnée, les instants $t_k$ de transition musicale correspondent aux maxima locaux d'une fonction d'onset calculée à partir du signal audio musical ;
- une unité d'association (505) de chaque instant $t_k$ de transition musicale avec une information locale comprenant un vecteur de n valeurs représentatives respectivement de l'énergie du signal audio dans chacun des n diagrammes obtenus entre l'instant $t_k$ de transition musicale et un instant suivant $t_{k+1}$ de transition musicale et/ou un vecteur de n valeurs représentatives respectivement de l'énergie du signal audio dans chacun des n diagrammes obtenus entre l'instant $t_k$ de transition musicale et un instant précédent $t_{k-1}$ de transition musicale;
- une deuxième unité de détermination (506), en fonction de l'information locale associée à chaque instant $t_k$ de transition musicale, d'une clé associée audit instant de transition musicale, les clés déterminées formant un premier ensemble de clés du signal audio ;
- une unité de génération (507) d'une signature du signal audio musical comprenant des couples, chaque couple comprenant une clé du premier ensemble de clés et un instant $t_k$ de transition musicale associé,

dans lequel les clés du premier ensemble de clés sont obtenues par quantification des vecteurs de n valeurs représentatives respectivement de l'énergie du signal dans chaque bande de fréquences de l'ensemble de n bandes de fréquences dans une période comprise entre l'instant $t_k$ de transition musicale et un instant suivant $t_{k+1}$ de transition musicale ou par quantification des vecteurs de n valeurs représentatives respectivement de l'énergie du signal dans chaque bande de fréquences de l'ensemble de n bandes de fréquences dans une période comprise entre l'instant $t_k$ de transition musicale et un instant précédent $t_{k-1}$ de transition musicale.

14. Dispositif d'identification d'un signal musical, de requête, parmi des signaux musicaux, de référence, le signal de requête et les signaux de référence étant représentés par des signatures respectives obtenues par la mise en œuvre du procédé selon l'une des revendications 1 à 3,
chaque signature de signal de référence comprenant ainsi un second ensemble de clés auxquelles sont associés des instants respectifs $\tau_k$ de transition musicale, ledit dispositif (600) comprenant :

- une unité de constitution (603), pour chaque signature de signal de référence ayant au moins une clé du second ensemble en commun avec le premier ensemble de clés de la signature du signal de requête, d'un troisième ensemble de clés comprenant la au moins une clé du second ensemble en commun avec le premier ensemble, chaque clé du troisième ensemble étant associée à la fois à l'instant de transition musicale associé à la clé dans la signature du signal de référence et à l'instant de transition musicale associé à la clé dans la signature du signal de requête ;
- une unité de détermination (604) d'un score en fonction d'une correspondance entre chaque paire d'instants de transition musicale associée à une clé du troisième ensemble ; et
- une unité de sélection (605) d'au moins une signature de signal de référence ayant l'un des scores les plus élevés, en tant que signature d'un signal de référence candidat pour identifier le signal de requête.

**Patentansprüche**

1. Verfahren zur Erzeugung einer Signatur eines musikalischen Tonsignals mit einer gegebenen Dauer, wobei das Verfahren die folgenden Schritte umfasst:

- Modellieren (104) des musikalischen Tonsignals, um für jedes Frequenzband einer Einheit von n Frequenzbändern, wobei n strikt größer ist als 1, ein Diagramm zu erhalten, das die Energie des Tonsignals für das Frequenzband in Abhängigkeit von der Zeit während der gegebenen Dauer darstellt;
- Bestimmen (103) des Zeitpunktes $t_k$ des musikalischen Übergangs des Tonsignals während der gegebenen Dauer, wobei die Zeitpunkte $t_k$ des musikalischen Übergangs den lokalen Maxima einer Onset-Funktion entsprechen, die ausgehend von dem musikalischen Tonsignal berechnet wird;
- Assoziieren (105) jedes Zeitpunkts $t_k$ des musikalischen Übergangs mit einer lokalen Information, die einen Vektor mit n Werten umfasst, die jeweils für die Energie des Tonsignals in jedem der n Diagramme, die zwischen dem Zeitpunkt $t_k$ des musikalischen Übergangs und einem nächsten Zeitpunkt $t_{k+1}$ des musikalischen Übergangs erhalten werden, repräsentativ sind, und/oder einen Vektor mit n Werten, die jeweils für die Energie des Tonsignals in jedem der n Diagramme, die zwischen dem Zeitpunkt $t_k$ des musikalischen Übergangs und einem vorhergehenden Zeitpunkt $t_{k-1}$ des musikalischen Übergangs erhalten werden, repräsentativ sind;
- Bestimmen (106) in Abhängigkeit von der lokalen Information, die mit jedem Zeitpunkt $t_k$ des musikalischen Übergangs assoziiert ist, eines Schlüssels, der mit dem Zeitpunkt des musikalischen Übergangs assoziiert ist, wobei die bestimmten Schlüssel eine erste Einheit von Schlüsseln des Tonsignals bilden;
- Erzeugen (107) einer Signatur des musikalischen Tonsignals, die Paare umfasst, wobei jedes Paar einen Schlüssel der ersten Einheit von Schlüsseln und einen assoziierten Zeitpunkt $t_k$ des musikalischen Übergangs umfasst,

wobei die Schlüssel der ersten Einheit von Schlüsseln durch Quantifizierung der Vektoren zu n Werten, die jeweils für die Energie des Signals in jedem Frequenzband der Einheit aus n Frequenzbändern in einer Periode repräsentativ sind, die zwischen dem Zeitpunkt $t_k$ des musikalischen Übergangs und einem nächsten Zeitpunkt $t_{k+1}$ des musikalischen Übergangs liegen, oder durch Quantifizierung der Vektoren zu n Werten, die jeweils für die Energie des Signals in jedem Frequenzband der Einheit aus n Frequenzbändern in einer Periode repräsentativ sind, die zwischen dem Zeitpunkt $t_k$ des musikalischen Übergangs und einem vorhergehenden Zeitpunkt $t_{k-1}$ des musikalischen Übergangs liegen, erhalten werden.

2. Verfahren nach Anspruch 1, wobei jeder Schlüssel der ersten Einheit von Schlüsseln ein Vektor mit n Bits ist, wobei jedes Bit mit dem Index i durch Vergleich zwischen dem Energiewert mit dem Index i in dem Vektor mit n Werten, von welchem ausgehend der Schlüssel bestimmt wird, und der Mittelwert des Vektors mit n Werten bestimmt wird.

3. Verfahren nach Anspruch 2, wobei, falls der Energiewert mit dem Index i in dem Vektor mit n Werten, von dem ausgehend der Schlüssel bestimmt wird, größer ist als der Mittelwert des Vektors mit n Werten, das Bit mit dem Index i gleich 1 ist, wobei das Bit mit dem Index i ansonsten 0 ist.

4. Verfahren zur Identifikation eines musikalischen Anfragesignals unter musikalischen Referenzsignalen, wobei das Anfragesignal und die Referenzsignale durch Signaturen dargestellt sind, die jeweils durch die Umsetzung des Verfahrens nach einem der Ansprüche 1 bis 3 erhalten werden, wobei jede Referenzsignalsignatur daher eine zweite Einheit von Schlüsseln umfasst, mit welchen jeweilige Zeitpunkte $\tau_k$ des musikalischen Übergangs assoziiert sind, wobei das Verfahren folgende Schritte umfasst:

   - für jede Referenzsignalsignatur, die mindestens einen Schlüssel der zweiten Einheit mit der ersten Einheit von Schlüsseln der Signatur des Anfragesignals gemeinsam hat, Bilden (303) einer dritten Einheit von Schlüsseln, die den mindestens einen Schlüssel der zweiten Einheit, der mit der ersten Einheit gemeinsam ist, umfasst, wobei jeder Schlüssel der dritten Einheit sowohl mit dem Zeitpunkt des musikalischen Übergangs, der mit dem Schlüssel in der Signatur des Referenzsignals assoziiert ist, als auch mit dem Zeitpunkt des musikalischen Übergangs, der mit dem Schlüssel in der Signatur des Anfragesignals assoziiert ist, assoziiert ist;
   - Bestimmen (304) eines Ergebnisses in Abhängigkeit von einer Entsprechung zwischen jedem Paar des Zeitpunktes des musikalischen Übergangs, das mit einem Schlüssel der dritten Einheit assoziiert ist; und
   - Auswählen (305) mindestens einer Referenzsignalsignatur, die eines der höchsten Ergebnisse aufweist, als Signatur eines Kandidatenreferenzsignals, um dem Anfragesignal zu entsprechen.

5. Verfahren nach Anspruch 4, wobei ein Satz von Referenzsignalsignaturen, der höchste Ergebnisse aufweist, ausgewählt wird, und eine Nachbearbeitung (306) ausgeführt wird:

   - an Kandidatenreferenzsignalen, die durch die Signaturen des Satzes dargestellt sind, und
   - an dem Anfragesignal,

   und das einen Identifikationsschritt des Anfragesignals als eines der Referenzsignale umfasst.

6. Verfahren nach einem der Ansprüche 4 und 5, wobei das Bestimmen (304) des Ergebnisses einer Referenzsignalsignatur die folgenden Schritte umfasst:

   - Bestimmen einer Affinitätsfunktion, die eine größere Anzahl des Zeitpunktes des musikalischen Übergangs des Referenzsignals, die mit den Schlüsseln der dritten Einheit assoziiert sind, mit den Zeitpunkten des musikalischen Übergangs des Anfragesignals, die mit den jeweiligen Schlüsseln der dritten Einheit assoziiert sind, in Entsprechung bringt;

   wobei das Ergebnis, das der Signatur des Referenzsignals zugewiesen ist, gleich der größten Anzahl ist.

7. Verfahren nach Anspruch 6, wobei die Affinitätsfunktion durch Anwenden einer Hough-Transformation auf sämtliche Paare des Zeitpunktes des musikalischen Übergangs, die mit den Schlüsseln der dritten Einheit assoziiert sind, erhalten wird.

8. Verfahren nach einem der Ansprüche 4 bis 7, wobei das Bestimmen (304) des Ergebnisses eines Referenztonsignals die folgenden Schritte umfasst:

   - Aufbauen einer Punktwolke (403), wobei jeder Punkt einem Schlüssel der dritten Einheit entspricht, wobei die Abszisse (401) des Punkts der Zeitpunkt des musikalischen Übergangs des Referenzsignals, das mit dem Schlüssel der dritten Einheit assoziiert ist, ist, und die Ordinate (402) des Punkts dem Zeitpunkt des musikalischen Übergangs des Anfragesignals entspricht, das mit dem Schlüssel der dritten Einheit assoziiert ist;
- Bestimmen einer Geraden (404), die ein Maximum von Punkten der aufgebauten Punktwolke verbindet;
- Bestimmen des Ergebnisses der Signatur des Referenzsignals als gleich der Anzahl von Punkten, die durch die Gerade, die in der Punktwolke bestimmt wird, verbunden sind.

9. Verfahren nach Anspruch 6 oder 7, wobei die Nachbearbeitung (306) sukzessiv für jedes Referenzsignal, das einer ausgewählten Signatur entspricht, und auf das Anfragesignal, das in Abhängigkeit von der bestimmten affinen Funktion für das Erhalten des Ergebnisses der Signatur des Referenzsignals modifiziert wird, angewandt wird.

10. Verfahren nach Anspruch 9, wobei das Anfragesignal durch Skalierung des Anfragesignals in Abhängigkeit von einem Gefälle (405) der Affinitätsfunktion und durch zeitliches Zuschneiden des Anfragesignals in Abhängigkeit von einer Ordinate am Nullpunkt (406) der Affinitätsfunktion modifiziert wird.

11. Computerprogramm, das Anweisungen für die Umsetzung des Verfahrens nach einem der Ansprüche 1 bis 3 umfasst, wenn dieses Programm von einem Prozessor ausgeführt wird.

12. Computerprogramm, das Anweisungen für die Umsetzung des Verfahrens nach einem der Ansprüche 4 bis 10 umfasst, wenn dieses Programm von einem Prozessor ausgeführt wird.

13. Vorrichtung zur Erzeugung eines musikalischen Tonsignals mit einer gegebenen Dauer, wobei die Vorrichtung (500) folgendes umfasst:

   - eine Einheit zum Modellieren (503) des musikalischen Tonsignals, um für jedes Frequenzband einer Einheit von n Frequenzbändern, wobei n strikt größer ist als 1, ein Diagramm zu erhalten, das die Energie des Tonsignals für das Frequenzband in Abhängigkeit von der Zeit während der gegebenen Dauer darstellt;
   - eine erste Einheit zum Bestimmen (502) des Zeitpunktes $t_k$ des musikalischen Übergangs des Tonsignals während der gegebenen Dauer, wobei die Zeitpunkte $t_k$ des musikalischen Übergangs den lokalen Maxima einer Onset-Funktion entsprechen, die ausgehend von dem musikalischen Tonsignal berechnet wird;
   - eine Einheit zum Assoziieren (505) jedes Zeitpunkts $t_k$ des musikalischen Übergangs mit einer lokalen Information, die einen Vektor mit n Werten umfasst, die jeweils für die Energie des Tonsignals in jedem der n Diagramme repräsentativ sind, die zwischen dem Zeitpunkt $t_k$ des musikalischen Übergangs und einem nächsten Zeitpunkt $t_{k+1}$ des musikalischen Übergangs erhalten werden, und/oder einen Vektor mit n Werten, die jeweils für die Energie des Tonsignals in jedem der n Diagramme repräsentativ sind, die zwischen dem Zeitpunkt $t_k$ des musikalischen Übergangs und einem vorhergehenden Zeitpunkt $t_{k-1}$ des musikalischen Übergangs erhalten werden;
   - eine zweite Einheit zum Bestimmen (506) in Abhängigkeit von der lokalen Information, die mit jedem Zeitpunkt $t_k$ des musikalischen Übergangs assoziiert ist, eines Schlüssels, der mit dem Zeitpunkt des musikalischen Übergangs assoziiert ist, wobei die bestimmten Schlüssel eine erste Einheit von Schlüsseln des Tonsignals bilden;
   - eine Einheit zum Erzeugen (507) einer Signatur des musikalischen Tonsignals, die Paare umfasst, wobei jedes Paar einen Schlüssel der ersten Einheit von Schlüsseln und einen assoziierten Zeitpunkt $t_k$ des musikalischen Übergangs umfasst,

   wobei die Schlüssel der ersten Einheit von Schlüsseln durch Quantifizierung der Vektoren zu n Werten, die jeweils für die Energie des Signals in jedem Frequenzband der Einheit aus n Frequenzbändern in einer Periode repräsentativ sind, die zwischen dem Zeitpunkt $t_k$ des musikalischen Übergangs und einem nächsten Zeitpunkt $t_{k+1}$ des musikalischen Übergangs liegt, oder durch Quantifizierung der Vektoren mit n Werten, die jeweils für die Energie des Signals in jedem Frequenzband der Einheit aus n Frequenzbändern in einer Periode repräsentativ sind, die zwischen dem Zeitpunkt $t_k$ des musikalischen Übergangs und einem vorhergehenden Zeitpunkt $t_{k-1}$ des musikalischen Übergangs liegt, erhalten werden.

14. Vorrichtung zur Identifikation eines musikalischen Anfragesignals unter musikalischen Referenzsignalen, wobei das Anfragesignal und die Referenzsignale durch Signaturen dargestellt sind, die jeweils durch Umsetzung des Verfahrens nach einem der Ansprüche 1 bis 3 erhalten werden, wobei jede Referenzsignalsignatur daher eine zweite Einheit von Schlüsseln umfasst, mit welcher die jeweiligen Zeitpunkte $\tau_k$ des musikalischen Übergangs assoziiert sind, wobei die Vorrichtung (600) folgendes umfasst:

- für jede Referenzsignalsignatur, die mindestens einen Schlüssel der zweiten Einheit mit der ersten Einheit von Schlüsseln der Signatur des Anfragesignals gemeinsam hat, eine Einheit zum Bilden (603) einer dritten Einheit von Schlüsseln, die den mindestens einen Schlüssel der zweiten Einheit, der mit der ersten Einheit gemeinsam ist, umfasst, wobei jeder Schlüssel der dritten Einheit sowohl mit dem Zeitpunkt des musikalischen Übergangs, der mit dem Schlüssel in der Signatur des Referenzsignals assoziiert ist, als auch mit dem Zeitpunkt des musikalischen Übergangs, der mit dem Schlüssel in der Signatur des Anfragesignals assoziiert ist, assoziiert ist;

- eine Einheit zum Bestimmen (604) eines Ergebnisses in Abhängigkeit von einer Entsprechung zwischen jedem Paar des Zeitpunktes des musikalischen Übergangs, das mit einem Schlüssel der dritten Einheit assoziiert ist; und

- eine Einheit zur Auswahl (605) mindestens einer Referenzsignalsignatur, die eines der höchsten Ergebnisse aufweist, als Signatur eines Kandidatenreferenzsignals, um das Anfragesignal zu identifizieren.

## Claims

1. Method for the generation of a signature of a musical audio signal of a given duration, the method comprising the following steps:

   - modelling (104) said musical audio signal in order to obtain, for each frequency band of a set of n frequency bands, n being strictly greater than 1, a diagram representing the energy of the audio signal for said frequency band, as a function of time during said given duration;
   - determining (103) musical transition times $t_k$ of the audio signal during the given duration, in which the musical transition times $t_k$ correspond to the local maxima of an onset function calculated on the basis of the musical audio signal;
   - associating (105) each musical transition time $t_k$ with an item of local information comprising a vector of n values representative respectively of the energy of the audio signal in each of the n diagrams obtained between the musical transition time $t_k$ and a subsequent musical transition time $t_{k+1}$ and/or a vector of n values representative respectively of the energy of the audio signal in each of the n diagrams obtained between the musical transition time $t_k$ and a preceding musical transition time $t_{k-1}$;
   - determining (106), as a function of the item of local information associated with each musical transition time $t_k$, a key associated with said musical transition time, the determined keys forming a first set of keys of the audio signal;
   - generating (107) a signature of the musical audio signal comprising couples, each couple comprising a key from the first set of keys and an associated musical transition time $t_k$;

   in which the keys in the first set of keys are obtained by quantization of the vectors of n values representative respectively of the energy of the signal in each frequency band in the set of n frequency bands in a period comprised between the musical transition time $t_k$ and a following musical transition time $t_{k+1}$ or by quantization of the vectors of n values representative respectively of the energy of the signal in each frequency band in the set of n frequency bands in a period comprised between the musical transition time $t_k$ and a preceding musical transition time $t_{k-1}$.

2. Method according to claim 1, in which each key in the first set of keys is a vector of n bits, each bit of index i being determined by comparison between the energy value of index i in the vector of n values on the basis of which said key is determined, and the average of the values of said vector of n values.

3. Method according to claim 2, in which if the energy value of index i in the vector of n values on the basis of which the key is determined is greater than the average of the values of said vector of n values, then the bit of index i is equal to 1, the bit of index i otherwise being equal to 0.

4. Method for identifying a query musical signal among reference musical signals, the query signal and the reference signals being represented by respective signatures obtained by implementation of the method according to one of claims 1 to 3,
   each signature of a reference signal thus comprising a second set of keys with which are associated respective musical transition times $\tau_k$, said method comprising the following steps:

   - for each signature of a reference signal having at least one key from the second set in common with the first set of keys of the signature of the query signal, constituting (303) a third set of keys comprising the at least one key from the second set in common with the first set, each key from the third set being associated both with the musical transition time associated with the key in the signature of the reference signal, and with the musical transition time associated with the key in the signature of the query signal;

- determining (304) a score as a function of a matching between each couple of musical transition times associated with a key in the third set; and
- selecting (305) at least one signature of a reference signal having one of the highest scores, as a signature of a candidate reference signal to correspond to the query signal.

5. Method according to claim 4, in which a set of signatures of reference signals having the highest scores is selected, and post-processing (306) is applied:

- to candidate reference signals, represented by the signatures of said set, and
- to the query signal,

and comprising a step of identifying the query signal as one of the reference signals.

6. Method according to one of claims 4 and 5, in which determining (304) the score of a signature of a reference signal comprises the following steps:

- determining an affine function matching a greater number of musical transition times of the reference signal that are associated with the keys in the third set with the musical transition times of the query signal that are associated with the respective keys in the third set;

in which the score allocated to the signature of the reference signal is equal to said greater number.

7. Method according to claim 6, in which the affine function is obtained by applying a Hough transform to the set of couples of musical transition times associated with the keys in the third set.

8. Method according to one of claims 4 to 7, in which determining (304) the score of a reference audio signal comprises the following steps:

- constructing a scatter plot (403), each dot corresponding to a key in the third set, the x-axis (401) of the dot being the musical transition time of the reference signal associated with the key in the third set and the y-axis (402) of the dot corresponding to the musical transition time of the query signal associated with the key in the third set;
- determining a straight line (404) connecting a maximum of dots in the constructed scatter plot;
- determining the score of the signature of the reference signal as being equal to the number of dots connected by said determined straight line in the scatter plot.

9. Method according to claim 6 or 7, in which the post-processing (306) is applied successively for each reference signal corresponding to a selected signature, and to the query signal modified as a function of the affine function determined in order to obtain the score of the signature of the reference signal.

10. Method according to claim 9, in which the query signal is modified by scaling the query signal as a function of a slope (405) of the affine function and by time cropping of said query signal as a function of a y-axis at the origin (406) of the affine function.

11. Computer program containing instructions for implementing the method according to one of claims 1 to 3, when this program is executed by a processor.

12. Computer program containing instructions for implementing the method according to one of claims 4 to 10, when this program is executed by a processor.

13. Device for generating a signature of a musical audio signal of a given duration, the device (500) comprising:

- a unit (503) for modelling said musical audio signal in order to obtain, for each frequency band of a set of n frequency bands, n being strictly greater than 1, a diagram representing the energy of the audio signal for said frequency band, as a function of time during said given duration;

- a first unit (502) for determining musical transition times $t_k$ of the audio signal during the given duration, in which the musical transition times $t_k$ correspond to the local maxima of an onset function calculated on the basis of the musical audio signal;

- a unit (505) for associating each musical transition time $t_k$ with an item of local information comprising a vector of n values representative respectively of the energy of the audio signal in each of the n diagrams obtained between the musical transition time $t_k$ and a subsequent musical transition time $t_{k+1}$ and/or a vector of n values representative respectively of the energy of the audio signal in each of the n diagrams obtained between the musical transition time $t_k$ and a preceding musical transition time $t_{k-1}$;

- a second unit (506) for determining, as a function of the item of local information associated with each musical transition time $t_k$, a key associated with said musical transition time, the determined keys forming a first set of keys of the audio signal;

- a unit (507) for generating a signature of the musical audio signal comprising couples, each couple comprising a key from the first set of keys and an associated musical transition time $t_k$;

in which the keys in the first set of keys are obtained by quantization of the vectors of n values representative respectively of the energy of the signal in each frequency band in the set of n frequency bands in a period comprised between the musical transition time $t_k$ and a following musical transition time $t_{k+1}$ or by quantization of the vectors of n values representative respectively of the energy of the signal in each frequency band in the set of n frequency bands in a period comprised between the musical transition time $t_k$ and a preceding musical transition time $t_{k-1}$.

14. Device for identifying a query musical signal among reference musical signals, the query signal and the reference signals being represented by respective signatures obtained by implementation of the method according to one of claims 1 to 3,

each signature of a reference signal thus comprising a second set of keys with which are associated respective musical transition times $\tau_k$, said device (600) comprising:

- a unit (603) for constituting, for each signature of a reference signal having at least one key from the second set in common with the first set of keys of the signature of the query signal, a third set of keys comprising the at least one key from the second set in common with the first set, each key in the third set being associated both with the musical transition time associated with the key in the signature of the reference signal, and with the musical transition time associated with the key in the signature of the query signal;

- a unit (604) for determining a score as a function of a matching between each couple of musical transition times associated with a key in the third set; and

- a unit (605) for selecting at least one signature of a reference signal having one of the highest scores, as a signature of a candidate reference signal for matching the query signal.

FIG. 1

FIG. 2

FIG. 3

REC — 301

SIGN — 302

ACCESS — 303

HOUGH — 304

SELECT — 305

POST_P — 306

OUT — 307

FIG. 4

20

EP 2 962 301 B1

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009234649 A1

- US 2008263360 A

**Littérature non-brevet citée dans la description**

- **ALONSO et al.** *Accurate Tempo Estimation Based on Harmonic + Noise Decomposition,* 2007